(19) Europäisches Patentamt
European Patent Office
Office européen des brevets

(11) EP 2 074 704 B1
(12) **FASCICULE DE BREVET EUROPEEN**

(45) Date de publication et mention de la délivrance du brevet:
**05.01.2011 Bulletin 2011/01**

(21) Numéro de dépôt: **07820243.9**

(22) Date de dépôt: **17.09.2007**

(51) Int Cl.:
**H04B 1/707** (2011.01)

(86) Numéro de dépôt international:
**PCT/EP2007/059765**

(87) Numéro de publication internationale:
**WO 2008/034790 (27.03.2008 Gazette 2008/13)**

(54) **PROCÉDÉ DE RÉCEPTION ET RÉCEPTEUR POUR UN SIGNAL DE RADIONAVIGATION MODULÉ PAR UNE FORME D'ONDE D'ÉTALEMENT CBOC OU TMBOC**

VERFAHREN ZUM EMPFANG UND EMPFÄNGER FÜR EIN DURCH EINE CBOC- ODER TMBOC-SPREIZSIGNALFORM MODULIERTES FUNKNAVIGATIONSSIGNAL

METHOD OF RECEPTION AND RECEIVER FOR A RADIO NAVIGATION SIGNAL MODULATED BY A CBOC OR TMBOC SPREAD WAVEFORM

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **19.09.2006 FR 0653818**

(43) Date de publication de la demande:
**01.07.2009 Bulletin 2009/27**

(73) Titulaire: **Centre National d'Etudes Spatiales 75039 Paris Cedex 01 (FR)**

(72) Inventeurs:
• **ISSLER, Jean-Luc**
  **31000 Toulouse (FR)**
• **RIES, Lionel**
  **31400 Toulouse (FR)**
• **JULIEN, Olivier**
  **31500 Toulouse (FR)**

• **MACABIAU, Christophe**
  **82000 Montauban (FR)**

(74) Mandataire: **Office Freylinger**
  **P.O. Box 48**
  **8001 Strassen (LU)**

(56) Documents cités:
**EP-A- 1 681 773     US-A1- 2005 281 325**

• **HEIN G W ET AL: "MBOC: The New Optimized Spreading Modulation Recommended for GALILEO L1 OS and GPS L1C" POSITION, LOCATION, AND NAVIGATION SYMPOSIUM, 2006 IEEE/ION CORONADO, CA APRIL 25-27, 2006, PISCATAWAY, NJ, USA, IEEE, 25 avril 2006 (2006-04-25), pages 883-892, XP010925014 ISBN: 0-7803-9454-2 cité dans la demande**

**Description**

**Domaine technique**

La présente invention concerne un procédé de réception, respectivement un récepteur pour un signal de radionavigation modulé par une forme d'onde d'étalement de type CBOC (de l'anglais « Composite Binary Offset Carrier ») ou TMBOC (de l'anglais « Time-Multiplexed Binary Offset Carrier »).

**Etat de la technique**

Les systèmes de positionnement par satellite comme GPS (Global Positioning System), Galileo, GLONASS, QZSS, Compass, IRNSS et autres utilisent des signaux de navigation modulés appelés « en spectre étalé ». Ces signaux véhiculent essentiellement des codes pseudo-aléatoires formés de séquences numériques se répétant périodiquement, dont la fonction principale est de permettre un Accès Multiple à Répartition de Code (AMRC) et la fourniture d'une mesure précise du temps de propagation du signal émis par le satellite. Accessoirement, les signaux de positionnement par satellites peuvent aussi transporter des données utiles.

Dans le cas de GPS, les signaux de navigation sont transmis dans les bandes de fréquences L1, centrée sur 1575,42 MHz et L2, centrée sur 1227,6 MHz. Au cours de la modernisation de GPS, la bande L5, centrée sur 1176,45MHz sera ajoutée. Les satellites de la constellation Galileo transmettront dans les bandes E2-L1-E1 (la portion de bande médiane L1 étant la même que celle du GPS), E5a (qui, selon la nomenclature Galileo, représente la bande L5 prévue pour le GPS), E5b (centrée sur 1207,14 MHz) et E6 (centrée sur 1278,75 MHz).

Les signaux de navigation sont formés par modulation des fréquences centrales (porteuses). Différents schémas de modulation sont déjà implantés pour réaliser les signaux de navigation ou du moins envisagés. Pour assurer l'interopérabilité et la compatibilité entre les systèmes GPS et Galileo, les Etats-Unis d'Amérique et l'Union Européenne se sont mis d'accord sur certains points concernant les schémas de modulation des signaux dans la bande L1, utilisée par les deux systèmes. Plus de détails sur les schémas de modulation proposés peuvent être tirés de la publication « MBOC : The New Optimized Spreading Modulation Recommended for GALILEO L1 OS and GPS L1C », Hein et al., InsideGNSS, mai/juin 2006, pp. 57-65.

L'un des schémas de modulation retenus comme candidat pour la modulation du signal Galileo OS L1 est connu sous la désignation « modulation TMBOC ». Ce type de modulation a d'ailleurs déjà été retenu pour le signal GPS L1C. La forme d'onde d'étalement TMBOC modulant la porteuse peut être décrite comme succession alternante de segments d'une première forme d'onde $BOC(n_2,m)$ et de segments d'une deuxième forme d'onde $BOC(n_i,m)$, avec $n_i > n_2$. « BOC » désigne une modulation de porteuse à double décalage, l'abréviation vient du terme « Binary Offset Carrier ». De manière générale, BOC(n,m) est une fonction du temps t définie par :

$$BOC(n,m)(t) = C_m(t) \cdot sign\left[\sin\left(2\pi f_{sc} t\right)\right], \qquad (1)$$

où $C_m(t)$ est un code pseudo-aléatoire à rythme de bribes (chip rate) m $\times$ 1,023 Mcps prenant les valeurs +1 ou -1 et $f_{sc}$ la fréquence n $\times$ 1,023 MHz. Une condition sur n et m est que le rapport 2n/m soit entier. La forme d'onde d'étalement $TMBOC_m(n_1,n_2)$ est définie par :

$$TMBOC_m(n_1,n_2)(t) = \begin{cases} C_m(t) \cdot sign\left[\sin\left(2\pi f_{n_2} t\right)\right], & si \ t \in S2 \\ C_m(t) \cdot sign\left[\sin\left(2\pi f_{n_1} t\right)\right], & si \ t \in S1 \end{cases}, \qquad (2)$$

où $f_{n_1} = n_1 \times 1,023$ MHz, $f_{n_2} = n_2 \times 1,023$ MHz, où S1 est l'union des segments « $BOC(n_1,m)$ » et S2 l'union des segments « $BOC(n_2,m)$ », S1 et S2 étant complémentaires sur l'axe du temps, et où $C_m(t)$ est le code pseudo-aléatoire du signal, à rythme de bribes m $\times$ 1,023 Mcps et prenant les valeurs +1 ou -1. Pour les signaux GPS L1C ainsi que Galileo OS L1 on aura les cas échéants m=1, $n_2$=1 et $n_1$=6. Le rapport entre la longueur des segments « BOC(1,1) » et la longueur des segments « BOC(6,1) » détermine comment la puissance du signal est répartie entre ses deux composantes.

Un autre schéma de modulation candidat pour la modulation du signal Galileo OS L1 est connu sous la désignation « modulation CBOC ». La forme d'onde d'étalement CBOC modulant la porteuse est une combinaison linéaire d'une première forme d'onde $BOC(n_2,m)$ et d'une deuxième forme d'onde $BOC(n_1,m)$. Une forme d'onde $CBOC_m$

$(n_1,n_2)$ peut s'écrire, dans ce cas :

$$CBOC_m(n_1,n_2)(t) = V \cdot BOC(n_2,m)(t) + W \cdot BOC(n_1,m)(t), \qquad (3)$$

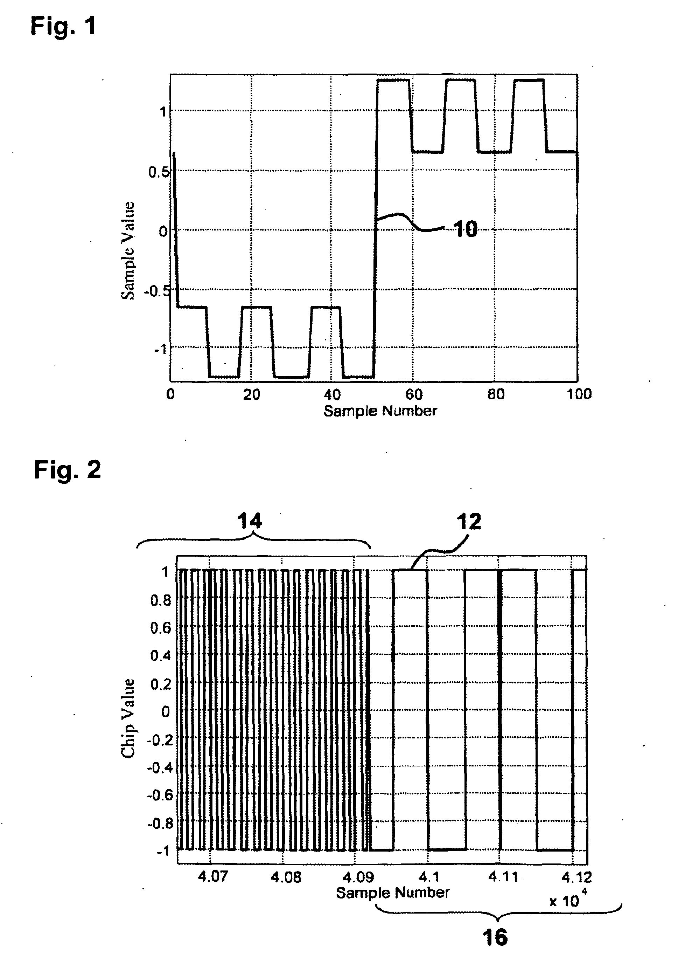

où V et W sont des paramètres réels définissant la pondération relative des composantes $BOC(n_2,m)$ et $BOC(n_1,m)$. Dans le cas d'une forme d'onde CBOC, les deux composantes BOC portent le même code pseudo-aléatoire. Si cette modulation est retenue pour Galileo OS L1, on aura $m=1$, $n_1=6$ et $n_2=1$. Une forme d'onde de modulation CBOC(6,1) **10** est représentée à la figure 1.

Pour déterminer dans un récepteur le temps de propagation du signal émis par un satellite (la pseudo-distance), le procédé de réception du signal comprend une étape de corrélation. Il est bien connu dans le domaine technique de corréler la forme d'onde modulant le signal de radionavigation avec des répliques locales de cette forme d'onde de modulation. La forme d'onde de modulation a une phase a priori inconnue qui doit être déterminée pour calculer la position du récepteur. Le procédé se déroule normalement de façon itérative et débute avec une estimation initiale de la phase inconnue de la forme d'onde de modulation. On génère alors dans le récepteur une réplique locale prompte de la forme d'onde de modulation, c.-à-d. une copie de la forme d'onde de modulation dont la phase correspond à l'estimation, qui est ensuite corrélée avec la forme d'onde de modulation. Parallèlement, on génère une ou des répliques locales décalées de la forme d'onde de modulation, c.-à-d. une ou des copies de la forme d'onde de modulation dont la phase est en avance ou en retard par rapport à l'estimation. Cette ou ces répliques locales décalées sont aussi corrélées avec la forme d'onde de modulation. Les résultats de ces corrélations sont alors utilisés pour améliorer l'estimation de la phase de la forme d'onde de modulation. Ensuite on réitère le procédé jusqu'à ce que la phase ait été déterminée avec suffisamment de précision.

Dans la demande de brevet européenne EP 1 681 773 on décrit ce procédé de réception dans le cas d'une forme d'onde de modulation de type CBOC. On opère donc la corrélation du signal entrant modulé par une forme d'onde CBOC et d'une réplique locale de cette forme d'onde CBOC. Cette solution implique, au niveau du récepteur, la génération d'une réplique CBOC. Il est donc nécessaire d'implémenter une quantification à quatre niveaux à l'entrée du corrélateur, ce qui nécessite au moins une architecture à 2 bits. La même demande de brevet mentionne aussi un deuxième procédé : dans celui-ci, on opère une corrélation entre le signal entrant et une réplique locale de la première composante BOC et une autre corrélation entre le signal entrant et une réplique locale de la deuxième composante BOC. Ensuite, les résultats des deux corrélations sont combinés. Dans ce deuxième procédé, les répliques locales sont à un bit ce qui peut être considéré comme avantageux par rapport à la première solution. Le prix à payer est un nombre d'opérations de corrélation doublé vis-à-vis de la première solution, toutes choses égales par ailleurs.

La demande de brevet française 06 05551 présente un procédé et un récepteur améliorés pour la réception d'un signal CBOC ayant une composante $BOC(n_1,m)$ et une composante $BOC(n_2,m)$, avec $n_2<n_1$. Afin d'opérer la corrélation entre une forme d'onde locale et la forme d'onde CBOC diffusée par les satellites, sur un intervalle de temps de durée T, cette demande propose de générer la forme d'onde locale en tant que forme d'onde binaire (signe de référence **12** à la figure 2), formée sur ledit intervalle de temps d'une succession alternant comprenant au moins un segment de forme d'onde $BOC(n_1,m)$ **14** et au moins un segment de forme d'onde $BOC(n_2,m)$ **16,** l'au moins un segment $BOC(n_1,m)$ **14** ayant une durée totale de $\alpha T$, $\alpha$ étant strictement compris entre 0 et 1, l'au moins un segment $BOC(n_2,m)$ **16** ayant une durée totale $(1-\alpha)T$. Ce procédé n'implique pas, notamment, de forme d'onde à plus de deux niveaux et ne nécessite pas non plus un nombre plus élevé de corrélateurs.

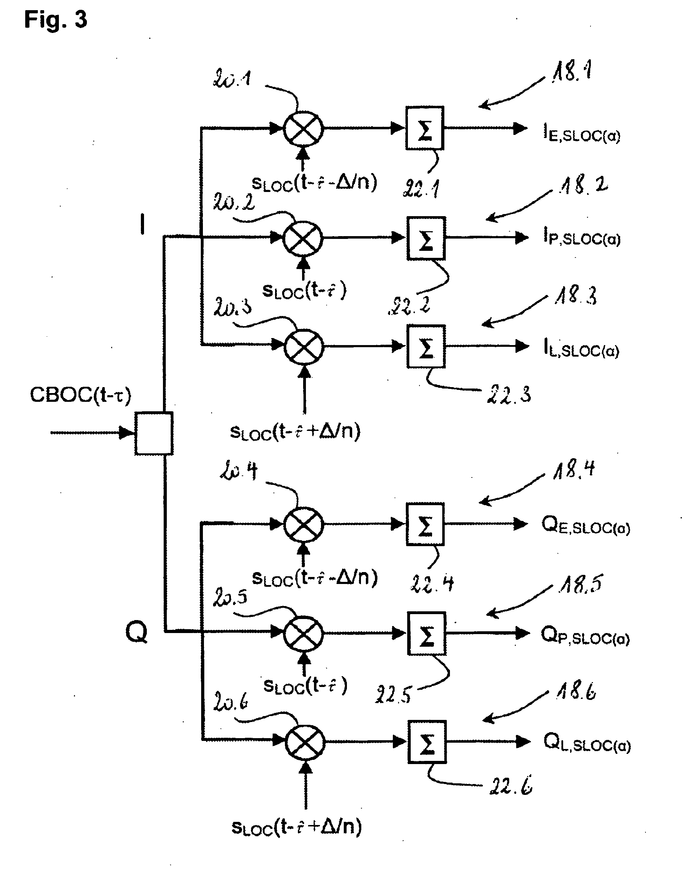

La figure 3 montre le schéma simplifié d'un canal de réception d'un récepteur adapté à la réalisation du procédé décrit dans FR 06 05551. On note que la même forme d'onde binaire locale $s_{LOC}$ est utilisée pour effectuer les différentes corrélations.

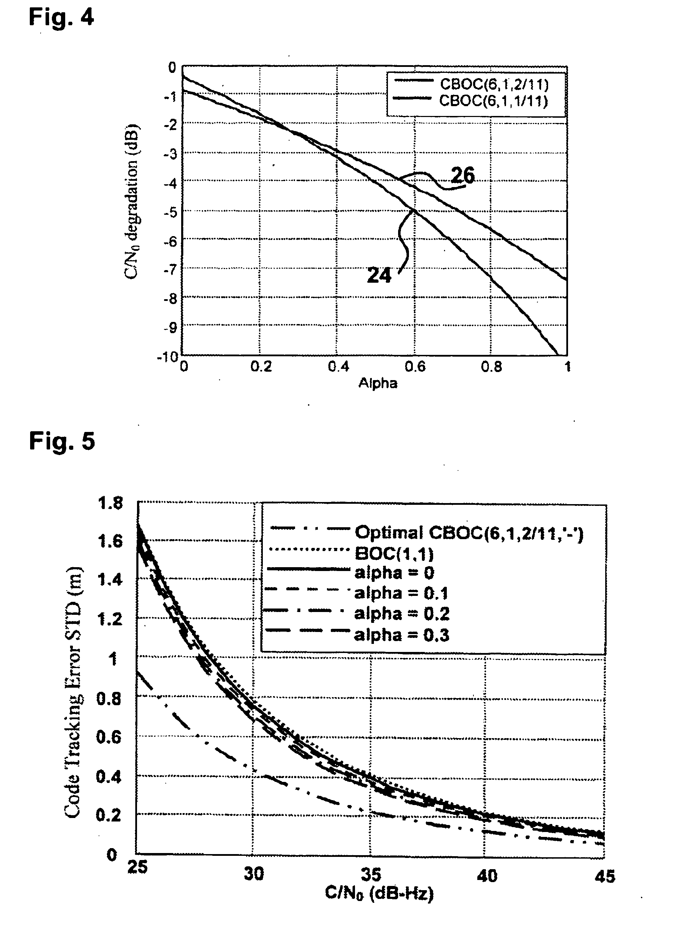

Lors de la mise en oeuvre du procédé décrit dans FR 06 05551, on observe, notamment dans le cas $m=1$, $n_1=6$ et $n_2=1$, que si a augmente - c.-à-d. si on augmente la quote-part de la composante BOC(6,1) au détriment de la quote-part de la composante BOC(1,1) dans la forme d'onde locale $s_{LOC}$ -, la dégradation du rapport $C/N_0$ (rapport de la puissance C de la porteuse à la densité spectrale $N_0$ du bruit) devient plus importante, ce qui rend la réception du signal plus difficile. La dégradation du rapport $C/N_0$ en fonction de la valeur du paramètre $\alpha$ est représentée à la figure 4 pour deux types de formes d'onde de modulation CBOC (l'une avec un onzième de la puissance totale dans la composante BOC(6,1), l'autre avec deux onzièmes, cette répartition de puissance étant citée à titre d'exemple). Par contre, si $\alpha$ augmente, on observe aussi une augmentation de la performance de synchronisation (« tracking performance ») et une meilleure résistance aux effets du multi-trajet.

**Objet de l'invention**

Un objectif de la présente invention est de proposer un nouveau procédé de réception d'un signal de radionavigation modulé par une forme d'onde d'étalement.

## Description générale de l'invention

Pour recevoir un signal de radionavigation modulé par une forme d'onde de modulation, la forme d'onde de modulation comprenant une composante $BOC(n_1,m)$ et une composante $BOC(n_2,m)$, $n_2$ étant strictement inférieur à $n_1$, on opère, sur un intervalle de temps de durée T, une corrélation entre une forme d'onde locale prompte et la forme d'onde de modulation et une corrélation entre une forme d'onde locale décalée (en avance ou en retard) et ladite forme d'onde de modulation. Selon l'invention, ladite forme d'onde locale prompte est générée en tant que forme d'onde binaire comprenant sur ledit intervalle de temps au moins un segment de forme d'onde $BOC(n_2,m)$ d'une durée totale de $(1-\alpha_A)T$ sur ledit intervalle de temps, $\alpha_A$ étant un paramètre supérieur ou égal à 0 et strictement inférieur à 1. Toujours selon l'invention, ladite forme d'onde locale décalée est générée en tant que forme d'onde binaire comprenant sur ledit intervalle de temps au moins un segment de forme d'onde $BOC(n_1,m)$ d'une durée totale de $\alpha_B T$ sur ledit intervalle de temps, $\alpha_B$ étant un paramètre strictement supérieur à 0 et inférieur ou égal à 1, et $\alpha_A$ étant différent de $\alpha_B$. A l'exception des cas où $\alpha_A=0$ la forme d'onde locale prompte comprend, sur ledit intervalle de temps, au moins un segment de forme d'onde $BOC(n_1,m)$ ; la durée totale de cet au moins un segment est $\alpha_a T$. A l'exception des cas où $\alpha_B=1$, la forme d'onde locale décalée comprend, sur ledit intervalle de temps, au moins un segment de forme d'onde $BOC(n_2,m)$ ; la durée totale de cet au moins un segment est $(1-\alpha_B)T$. Du fait que $\alpha_A$ et $\alpha_B$ sont différents, les formes d'onde locales prompte et décavée diffèrent par les quotes-parts des segments $BOC(n_1,m)$ et $BOC(n_2,m)$. Grâce à l'invention, on peut donc adapter séparément les formes d'onde prompte et décalée pour réaliser une réception améliorée du signal de radionavigation. Cela permet, dans une certaine mesure, de découpler l'amélioration de la performance de synchronisation de la dégradation du rapport $C/N_0$ tout en gardant l'avantage des formes d'onde locales binaires.

Dans le cas particulier où $\alpha_A=0$, la forme d'onde locale prompte est une réplique locale de la composante $BOC(n_2,m)$ de la forme d'onde composite sur ledit intervalle de corrélation. La valeur de $\alpha_B$ peut, en principe, être librement choisie dans la plage définie plus haut, de préférence toutefois dans une partie supérieure de cette plage, p.ex. de 0,8 à 1.

Dans le cas particulier où $\alpha_B=1$, la forme d'onde locale décalée est une réplique locale de la composante $BOC(n_1,m)$ de la forme d'onde composite sur ledit intervalle de temps. La valeur de $\alpha_A$ peut, en principe, être librement choisie dans la plage définie plus haut, de préférence toutefois dans une partie inférieure de cette plage, p.ex. de 0 à 0,2.

De préférence, la valeur du paramètre $\alpha_A$ est substantiellement inférieure à la valeur du paramètre $\alpha_B$. Le cas où les deux conditions $\alpha_A=0$ et $\alpha_B=1$ sont remplies est considéré comme particulièrement avantageux.

La forme d'onde locale décalée peut comprendre une forme d'onde locale en avance et/ou une forme d'onde en retard et/ou une différence entre une forme d'onde locale en avance et une forme d'onde locale en retard. Selon un mode de réalisation préféré de l'invention, on effectue une corrélation sur une voie prompte d'un récepteur (entre la forme d'onde de modulation entrante et la forme d'onde locale binaire prompte), une corrélation sur une voie dite « en retard » du récepteur (entre la forme d'onde de modulation entrante et une forme d'onde locale binaire en retard) et une corrélation sur une voie dite « en avance » du récepteur (entre la forme d'onde de modulation entrante et une forme d'onde locale binaire en avance). Selon un autre mode de réalisation préféré de l'invention, on effectue, sur une première voie, une corrélation entre la forme d'onde de modulation entrante et la forme d'onde locale binaire prompte et, sur une seconde voie, une corrélation entre la forme d'onde de modulation entrante et la différence d'une forme d'onde binaire locale en avance et d'une forme d'onde binaire locale en retard.

Il est à noter que le procédé selon l'invention est particulièrement avantageux pour la réception d'un signal de radionavigation modulé par une forme d'onde de modulation de type CBOC, celle-ci comprenant une combinaison linéaire à paramètres réels de la composante $BOC(n_1,m)$ et de la composante $BOC(n_2,m)$. Cependant, le procédé peut aussi être utilisé pour recevoir signal de radionavigation modulé par une forme d'onde de modulation de type TMBOC, celle-ci comprenant une succession alternante de segments de la composante $BOC(n_1,m)$ et de segments de la composante $BOC(n_2,m)$. Un récepteur adapté pour la mise en oeuvre du procédé pourrait donc recevoir aussi bien des signaux modulés selon le schéma CBOC que des signaux modulés selon le schéma TMBOC, ce qui assurerait l'interopérabilité GPS L1 C/Galileo OS L1 même si le schéma de modulation CBOC était retenu pour Galileo OS L1.

Un récepteur pour mettre en oeuvre le procédé comprend avantageusement des générateurs de forme d'onde locale pour générer une forme d'onde locale prompte et une forme d'onde locale décalée ainsi que des corrélateurs pour opérer, sur l'intervalle de temps de durée T, une corrélation entre la forme d'onde locale prompte et la forme d'onde de modulation et une corrélation entre la forme d'onde locale décalée et la forme d'onde de modulation. Ces générateurs de forme d'onde locale sont configurés pour générer ladite forme d'onde locale prompte en tant que forme d'onde binaire comprenant sur ledit intervalle de temps au moins un segment de forme d'onde $BOC(n_2,m)$ d'une durée totale de $(1-\alpha_A)T$ sur ledit intervalle de temps, $\alpha_A$ étant un paramètre supérieur ou égal à 0 et strictement inférieur à 1, et pour générer ladite forme d'onde locale décalée en tant que forme d'onde binaire comprenant sur ledit intervalle de temps au moins un segment de forme d'onde $BOC(n_1,m)$ d'une durée totale de $\alpha_B T$ sur ledit intervalle de temps, $\alpha_B$ étant un paramètre différent du paramètre $\alpha_A$ et strictement supérieur à 0 et inférieur ou égal à 1.

De préférence, le récepteur comprend un générateur de forme d'onde locale prompte, un générateur de forme d'onde locale décalée, un premier corrélateur doté d'un mélangeur pour mélanger la forme d'onde de modulation avec la forme d'onde locale prompte venant du générateur de forme d'onde locale prompte et un deuxième corrélateur doté d'un mélangeur pour mélanger la forme d'onde de modulation avec la forme d'onde locale décalée venant du générateur de forme d'onde locale décalée.

## Brève description des dessins

D'autres particularités et caractéristiques de l'invention ressortiront de la description détaillée de modes de réalisation avantageux présentés ci-dessous, à titre d'illustration, avec référence aux dessins annexés qui montrent:

Fig. 1: une représentation temporelle d'une forme d'onde CBOC(6,1);

Fig. 2: une représentation temporelle d'une forme d'onde binaire locale formée d'une succession de segments BOC(6,1) et BOC(1,1) ;

Fig. 3: un schéma de principe d'un récepteur utilisant la même forme d'onde locale binaire dans les corrélateurs prompt et décalés;

Fig. 4: une représentation de la dégradation du rapport $C/N_0$ en fonction du paramètre $\alpha$, pour le récepteur de la figure 3 ;

Fig. 5: une représentation de l'erreur de poursuite de code en fonction du rapport $C/N_0$ pour le récepteur de la figure 3 ;

Fig. 6: un schéma de principe d'un récepteur adapté pour mettre en oeuvre le nouveau procédé ;

Fig. 7: un schéma de principe d'un autre récepteur adapté pour mettre en oeuvre le nouveau procédé ;

Fig. 8: une représentation de l'erreur de poursuite de code en fonction du rapport $C/N_0$, pour le nouveau procédé, avec la condition $\alpha_A=0$ et pour différentes valeurs de $\alpha_B$, et pour un cas de comparaison ;

Fig. 9: une représentation de la sortie du discriminateur en fonction de l'écart temporel entre le code du signal entrant et le code local pour le nouveau procédé, avec la condition $\alpha_A=0$ et pour différentes valeurs de $\alpha_B$, et pour un cas de comparaison.

## Description détaillée

La figure 1 montre une forme d'onde CBOC(6,1) **10,** définie par :

$$CBOC(6,1)(t) = V \cdot BOC(1,1)(t) - W \cdot BOC(6,1)(t) \qquad (4)$$

où V et W sont les facteurs de pondération. Ici comme dans la suite, le rythme de bribes du code pseudo-aléatoire est fixé à 1, ce qui nous permet d'omettre l'indice « m » dans les notations introduites par les équations (1)-(3).

Pour le signal Galileo OS L1, on envisage différentes valeurs de V et de W, qui dépendent du schéma de multiplexage de ce signal. On utilise par exemple les notations CBOC(6,1,1/11), CBOC(6,1,2/11). Les indices « 1/11 » et « 2/11 » indiquent le schéma de multiplexage utilisé pour le signal de radionavigation et font référence à une certaine pondération des composantes BOC(1,1) et BOC(6,1). Pour CBOC(6,1,1/11), on a V=0,383998 et W=0,121431 ; pour CBOC(6,1,2/11), on a V=0,358235 et W=0,168874. Parfois, un signe « + » ou « - » est utilisé pour indiquer si le coefficient W est précédé d'un « + » ou d'un « - » dans l'équation (4): p.ex. CBOC(6,1,1/11,-) ou CBOC(6,1,1/11,+).

Afin de mieux pouvoir illustrer les avantages de la présente invention, nous allons d'abord discuter la dégradation du rapport $C/N_0$, la performance de synchronisation et la résistance au multi-trajet dans le cas d'un procédé de réception d'un signal de radionavigation qui utilise sur les voies de corrélation prompte et décalées la même forme d'onde binaire locale **12,** formée sur l'intervalle de corrélation (de durée T) d'une succession alternante comprenant au moins un segment de forme d'onde BOC(6,1) **14** et au moins un segment de forme d'onde BOC(1,1) **16,** l'au moins un segment BOC(6,1) **14** ayant une durée totale de $\alpha T$, $\alpha$ étant strictement compris entre 0 et 1, l'au moins un segment BOC(1,1) **16** ayant une durée totale $(1-\alpha)T$. Nous noterons $\beta=1-\alpha$ et $s_{LOC}(\alpha)$ la forme d'onde locale binaire.

Le récepteur montré à la figure 3 comprend des corrélateurs **18.1-18.6** présentant chacun un mélangeur **20.1-20.6,** mélangeant le signal entrant de type CBOC avec une copie de la forme d'onde binaire locale $s_{LOC}$ du type montré à la figure 2 et un intégrateur **22.1-22.6** effectuant l'intégration des signaux mélangés et produisant un signal de sortie. Le premier corrélateur **18.1,** dit « en avance », fournit la valeur de la corrélation $I_{E,SLOC(\alpha)}$ de la partie en phase du signal entrant CBOC(t-$\tau$) et d'une copie « en avance » $s_{LOC}(t-\hat{\tau}-\Delta/n)$ de la forme d'onde binaire locale $s_{LOC}$. ($\tau$ est la phase du code pseudo-aléatoire du signal reçu et $\hat{\tau}$ une estimée de $\tau$, $\Delta$ est la durée d'une bribe et n détermine la fraction de durée de bribe que la copie de la forme d'onde binaire locale est en avance par rapport à l'estimée $\hat{\tau}$) Le deuxième corrélateur **18.2** est un corrélateur « prompt » fournissant la valeur $I_{P,SLOC(\alpha)}$ de la corrélation de la partie en phase du signal entrant CBOC(t-$\tau$) et d'une copie prompte $s_{LOC}(t-\hat{\tau})$ de la forme d'onde binaire locale. Le troisième corrélateur **18.3** est un corrélateur « en retard », fournissant la valeur $I_{L,SLOC(\alpha)}$ de la corrélation de la partie en phase du signal entrant CBOC(t-$\tau$) et d'une copie « en retard » $s_{LOC}(t-\hat{\tau}+\Delta/n)$ de la forme d'onde binaire locale $s_{LOC}$. Le corrélateur **18.4,** fournit la valeur de la corrélation $Q_{E,SLOC(\alpha)}$ de la partie en quadrature de phase du signal entrant CBOC(t-$\tau$) et d'une copie « en avance » $s_{LOC}(t-\hat{\tau}-\Delta/n)$ de la forme d'onde binaire locale $s_{LOC}$. Le corrélateur **18.5** fournit la valeur $Q_{P,SLOC(\alpha)}$ de la corrélation de la partie en quadrature de phase du signal entrant CBOC(t-$\tau$) et d'une copie prompte $s_{LOC}(t-\hat{\tau})$ de la forme d'onde binaire locale. Le corrélateur **18.6** fournit la valeur $Q_{L,SLOC(\alpha)}$ de la corrélation de la partie en quadrature de phase du signal entrant CBOC(t-$\tau$) et d'une copie « en retard » $s_{LOC}(t-\hat{\tau}+\Delta/n)$ de la forme d'onde binaire locale $s_{LOC}$.

A la sortie des corrélateurs on obtient donc :

$$I_{X,SLOC(\alpha)} = \begin{pmatrix} (\beta V R_{BOC(1,1)}(\varepsilon_\tau + \delta_X) - (\beta W + \alpha V) R_{BOC(1,1)/BOC(6,1)}(\varepsilon_\tau + \delta_X)) \\ + \alpha W R_{BOC(6,1)}(\varepsilon_\tau + \delta_X))\cos(\varepsilon_\phi) + r_{X,SLOC(\alpha)} \end{pmatrix} \quad (5)$$

$$Q_{X,SLOC(\alpha)} = \begin{pmatrix} (\beta V R_{BOC(1,1)}(\varepsilon_\tau + \delta_X) - (\beta W + \alpha V) R_{BOC(1,1)/BOC(6,1)}(\varepsilon_\tau + \delta_X)) \\ + \alpha W R_{BOC(6,1)}(\varepsilon_\tau + \delta_X))\sin(\varepsilon_\phi) + r_{X,SLOC(\alpha)} \end{pmatrix}, \quad (6)$$

où « X » indique la voie de corrélation considérée (X=L : voie de corrélation en retard, X=P : voie de corrélation prompte, X=E : voie de corrélation en avance), $R_{BOC(1,1)}$ la fonction d'autocorrélation d'une forme d'onde BOC(1,1), $R_{BOC(6,1)}$ la fonction d'autocorrélation d'une forme d'onde BOC(6,1) et $R_{BOC(1,1)/BOC(6,1)}$ la fonction de corrélation entre une forme d'onde BOC(1,1) et une forme d'onde BOC(6,1), $\varepsilon_\tau$ la différence entre la phase du code pseudo-aléatoire local $\hat{\tau}$, estimée de la phase $\tau$ du code pseudo-aléatoire du signal entrant, et de la phase $\tau$, $\varepsilon_\phi$, la différence entre la phase $\hat{\phi}$ de la porteuse du signal local, estimée de la phase $\phi$ de la porteuse du signal entrant, et de la phase $\phi$, $\delta_X$=-$\Delta$/n pour X=E, $\delta_X$=0 pour X=P et $\delta_X$=+$\Delta$/n pour X=E, et r représente le bruit en sortie de corrélateur.

Dans la suite, on considérera la corrélation $R_{CBOC/SLOC(\alpha)}$ d'une forme d'onde CBOC définie dans (4) et d'une forme d'onde locale binaire $s_{LOC}(\alpha)$:

$$R_{CBOC/SLOC(\alpha)}(t) = (\beta V R_{BOC(1,1)}(t) - (\beta W + \alpha V) R_{BOC(1,1)/BOC(6,1)}(t) + \alpha W R_{BOC(6,1)}(t)) \quad (7)$$

La fonction d'autocorrélation $R_{SLOC(\alpha)}$ de la forme d'onde locale binaire $s_{LOC(\alpha)}$ peut être approximée comme :

$$R_{SLOC(\alpha)}(t) = \beta R_{BOC(1,1)}(t) + \alpha R_{BOC(6,1)}(t), \quad (8)$$

et la fonction d'autocorrélation $R_{CBOC}$ de la fonction CBOC s'écrit :

$$R_{CBOC}(t) = (V^2 R_{BOC(1,1)}(t) - 2VW R_{BOC(1,1)/BOC(6,1)}(t) + W^2 R_{BOC(6,1)}(t)). \quad (9)$$

La dégradation du rapport C/N$_0$ peut être exprimé comme :

$$\deg_{C/N0}(\alpha) = \frac{(R_{CBOC/SLOC(\alpha)}(0))^2}{(R_{CBOC}(0))^2} = \frac{(V + \alpha(W-V))^2}{(V^2 + W^2)^2},$$

ce qui signifie que plus la valeur de $\alpha$ est grande plus la perte en signal de corrélation est importante par rapport au cas où on utilise une réplique CBOC comme forme d'onde locale. La dégradation du rapport C/N$_0$ est représentée à la figure 4 pour la réception de signaux CBOC(6,1,1/11) (courbe **24**) et CBOC(6,1,2/11) (courbe **26**). On remarque que pour obtenir une dégradation du rapport C/N$_0$ inférieure à 3 dBs, on doit choisir $\alpha$ dans la plage allant de 0 à 0,4.

Les valeurs à la sortie des corrélateurs sont utilisées dans une boucle pour minimiser la valeur de $\varepsilon_\tau$. On peut par exemple calculer le discriminateur de produit scalaire D (dot product discriminator) :

$$D = (I_{E,SLOC(\alpha)} - I_{L,SLOC(\alpha)})I_{P,SLOC(\alpha)} + (Q_{E,SLOC(\alpha)} - Q_{L,SLOC(\alpha)})Q_{P,SLOC(\alpha)} \qquad (10)$$

L'erreur théorique de poursuite de code résultant s'exprime comme :

$$\sigma_{DP,SLOC(\alpha)}^2 = \frac{B_L(1 - 0,5B_LT)\widetilde{R}_{SLOC(\alpha)}(d)}{\frac{P}{2N_0}\left(\frac{d\widetilde{R}_{CBOC/SLOC(\alpha)}(x)}{dx}\bigg|_{x=\frac{d}{2}}\right)^2}\left(1 + \frac{\widetilde{R}_{SLOC(\alpha)}(0)}{\frac{PT}{N_0}\widetilde{R}_{CBOC/SLOC(\alpha)}^2(0)}\right), \qquad (11)$$

où les fonctions d'autocorrélation filtrées sont données par

$$\widetilde{R}_X(x) = \int_{-B}^{+B}|G_X(f)|^2 e^{-2i\pi fx}df \qquad (11')$$

et les fonctions d'intercorrélation filtrées par

$$\widetilde{R}_{X/Y}(x) = \int_{-B}^{+B}G_X(f)G_Y^*(f)e^{-2i\pi fx}df. \qquad (11'')$$

Dans les équations (11)-(11") qui précèdent, B représente la largeur de la bande du filtre de tête HF (ici le filtre est supposé rectangulaire), B$_L$ la bande du filtre de boucle de la DLL, T le temps d'intégration utilisé pour la corrélation, P la puissance du signal utilisé entrant ; d l'espacement entre la forme d'onde locale en avance et la forme d'onde locale en retard, N$_0$ le niveau de la densité spectrale du bruit thermique, et G$_X$ la transformée de Fourier de la forme d'onde X.

L'erreur de poursuite de code est représentée en fonction du rapport C/N$_0$ à la figure 5 pour différentes valeurs de $\alpha$, dans le cas de poursuite d'un signal CBOC(6,1,2/11,'-'), un espacement de 0,1 bribes entre la forme d'onde binaire locale en avance et la forme d'onde binaire locale en retard, un filtre 12 MHz (single-sided) à l'entrée et 4 ms de temps d'intégration (de corrélation). On voit que l'erreur diminue si $\alpha$ augmente. En termes de performance de synchronisation, il serait donc avantageux de choisir $\alpha$ près de 1. Or, dans ce qui précède, nous venons de voir que pour ces valeurs de $\alpha$, la dégradation du rapport C/N$_0$ est considérable.

On note également que pour $\alpha=0,2$, l'enveloppe multi-trajet équivaut à celle qu'on obtient lorsqu'on utilise comme forme d'onde locale une réplique CBOC(6,1,2/11,'-').

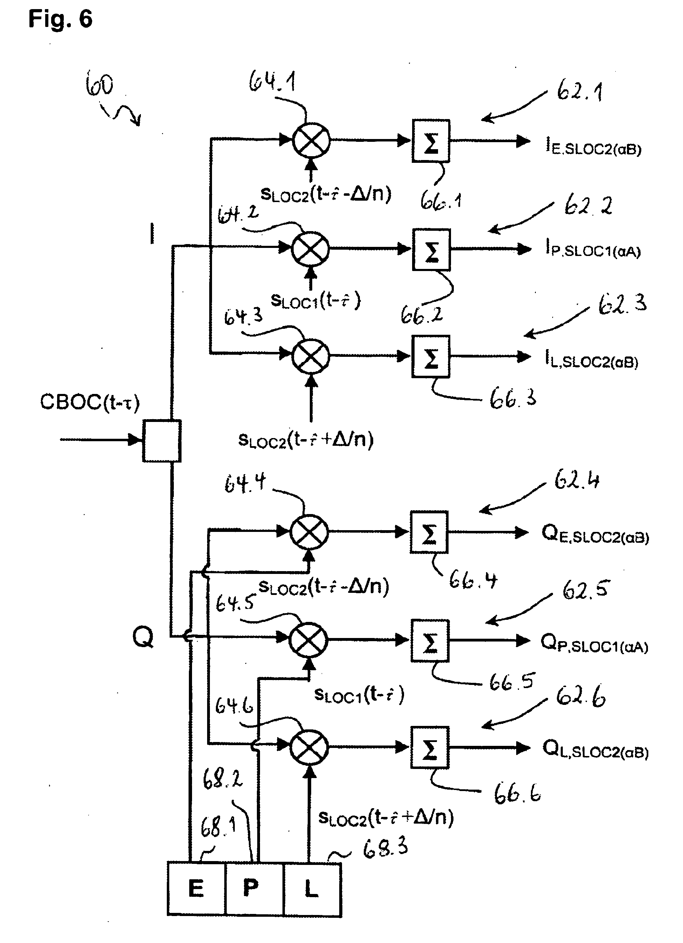

Selon la présente invention, on utilise des formes d'onde locale prompte et décalées différentes. Cela permet d'optimiser les formes d'onde locales décalées indépendamment de la forme locale prompte. La figure 6 montre le schéma d'un premier récepteur **60** adapté pour mettre en oeuvre le procédé. Le récepteur comprend des corrélateurs **62.1-62.6** présentant chacun un mélangeur **64.1-64.6,** mélangeant le signal entrant de type CBOC avec une copie de forme d'onde binaire locale et un intégrateur **66.1-66.6** effectuant l'intégration des signaux mélangés et produisant un signal de sortie.

Le récepteur présente un ensemble de générateurs **68.1-68.3** de forme d'onde binaire locale. Le générateur **68.1** génère une copie en avance $s_{LOC2}(t\text{-}\hat{\tau}\text{-}\Delta/n)$ d'une forme d'onde binaire locale $s_{LOC2}$. La forme d'onde $s_{LOC2}$ comprend sur l'intervalle de corrélation un segment de forme d'onde BOC(6,1) d'une durée totale de $\alpha_B T$ et, si $\alpha_B{\neq}1$, un segment de forme d'onde BOC(1,1) d'une durée de $(1\text{-}\alpha_B)T$. Dans la suite, nous assumerons que $\alpha_B$ se trouve dans l'intervalle semi-ouvert ]0,1], ce qui nous permettra de traiter le cas particulier $\alpha_B$=1 en même temps que les autres cas. Si $\alpha_B$=1, la forme d'onde $s_{LOC2}$ est une forme d'onde BOC(6,1) pure. Pour des valeurs de $\alpha_B$ strictement inférieures à 1, $s_{LOC2}$ comprend aussi un segment BOC(1,1) et peut, par exemple, avoir l'apparence de la forme d'onde **12** de la figure 2. Le générateur **68.3** génère une copie en retard $s_{LOC2}(t\text{-}\hat{\tau}\text{+}\Delta/n)$ de la forme d'onde binaire locale $s_{LOC2}$. Le générateur **68.2** génère une copie prompte $s_{LOC1}(t\text{-}\hat{\tau})$ d'une forme d'onde binaire locale $s_{LOC1}$. La forme d'onde $s_{LOC1}$ comprend sur l'intervalle de corrélation un segment de forme d'onde BOC(1,1) d'une durée totale de $(1\text{-}\alpha_A)T$ et, si $\alpha_A{\neq}0$, un segment de forme d'onde BOC(6,1) d'une durée de $\alpha_A T$. Dans la suite, nous assumerons que $\alpha_A$ se trouve dans l'intervalle semi-ouvert [0,1[. Si $\alpha_A$=0, la forme d'onde $s_{LOC1}$ est une forme d'onde BOC(1,1) pure. Pour des valeurs de $\alpha_A$ strictement supérieures à 0, $s_{LOC2}$ comprend aussi un segment BOC(6,1) et peut aussi prendre l'apparence de la forme d'onde **12.**

Le corrélateur **62.1,** fournit la valeur de la corrélation $I_{E,SLOC2(\alpha B)}$ de la partie en phase du signal entrant CBOC $(t\text{-}\tau)$ et d'une copie « en avance » $s_{LOC2}(t\text{-}\hat{\tau}\text{-}\Delta/n)$ de la forme d'onde binaire locale $s_{LOC2}$. (Comme précédemment, $\tau$ est la phase du code pseudo-aléatoire du signal reçu et $\hat{\tau}$ une estimée de $\tau$, $\Delta$ est la durée d'une bribe et n détermine la fraction de durée de bribe que la copie de la forme d'onde binaire locale est en avance par rapport à l'estimée $\hat{\tau}$.) Le corrélateur **62.2** est un corrélateur « prompt » fournissant la valeur $I_{P,SLOC1(\alpha A)}$ de la corrélation de la partie en phase du signal entrant CBOC$(t\text{-}\tau)$ et d'une copie prompte $s_{LOC1}(t\text{-}\hat{\tau})$ de la forme d'onde binaire locale $s_{LOC1}$. Le corrélateur **62.3** est un corrélateur « en retard », fournissant la valeur $I_{L,SLOC2(\alpha B)}$ de la corrélation de la partie en phase du signal entrant CBOC$(t\text{-}\tau)$ et d'une copie « en retard » $s_{LOC2}(t\text{-}\hat{\tau}\text{+}\Delta/n)$ de la forme d'onde binaire locale $s_{LOC2}$. Le corrélateur **62.4,** fournit la valeur de la corrélation $Q_{E,SLOC2(\alpha B)}$ de la partie en quadrature de phase du signal entrant CBOC$(t\text{-}\tau)$ et d'une copie « en avance » $s_{LOC2}(t\text{-}\hat{\tau}\text{-}\Delta/n)$ de la forme d'onde binaire locale $s_{LOC2}$. Le corrélateur **62.5** fournit la valeur $Q_{P,SLOC1(\alpha A)}$ de la corrélation de la partie en quadrature de phase du signal entrant CBOC$(t\text{-}\tau)$ et d'une copie prompte $s_{LOC1}(t\text{-}\hat{\tau})$ de la forme d'onde binaire locale $s_{LOC1}$. Le corrélateur **62.6** fournit la valeur $Q_{L,SLOC2(\alpha B)}$ de la corrélation de la partie en quadrature de phase du signal entrant CBOC$(t\text{-}\tau)$ et d'une copie « en retard » $s_{LOC2}(t\text{-}\hat{\tau}\text{+}\Delta/n)$ de la forme d'onde binaire locale $s_{LOC2}$. Pour des raisons de clarté, la figure 6 ne montre que les connexions allant respectivement des générateurs **68.1, 68.2** et **68.3** aux mélangeurs **64.4, 64.5** et **64.6.** Les connexions vers les mélangeurs **64.1, 64.2** et **64.3** n'ont pas été dessinées.

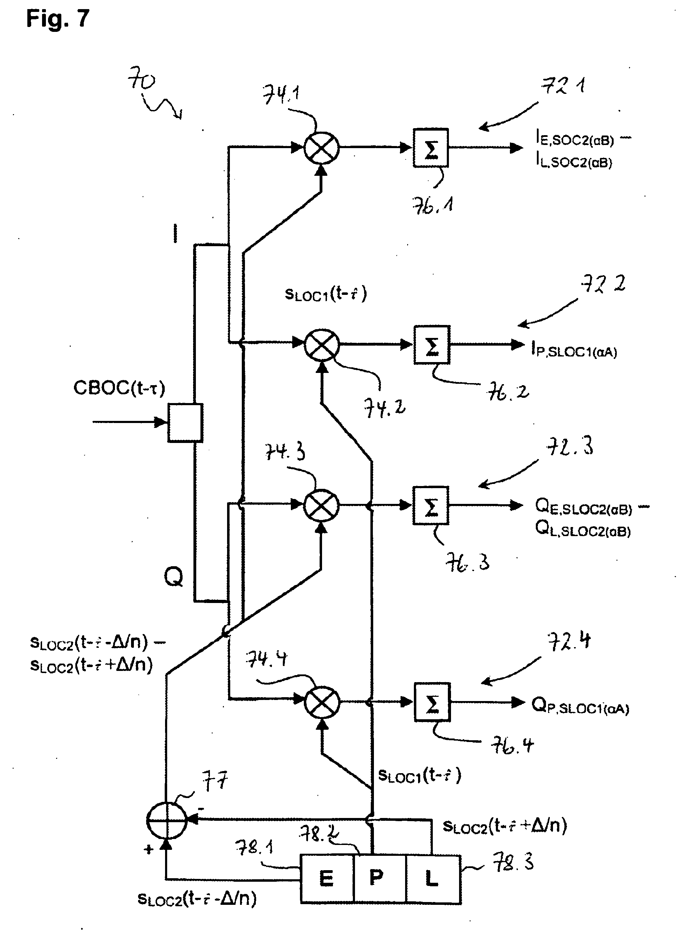

La figure 7 montre le schéma de principe d'un autre récepteur **70** pouvant exécuter le nouveau procédé. Le récepteur **70** comprend des corrélateurs **72.1-72.4** présentant chacun un mélangeur **74.1-74.4,** mélangeant le signal entrant de type CBOC avec une copie de forme d'onde binaire locale et un intégrateur **76.1-76.4** effectuant l'intégration des signaux mélangés et produisant un signal de sortie.

Le récepteur présente un ensemble de générateurs **78.1-78.3** de forme d'onde binaire locale. Le générateur **78.1** génère une copie en avance $s_{LOC2}(t\text{-}\hat{\tau}\text{-}\Delta/n)$ d'une forme d'onde binaire locale $s_{LOC2}$. Le générateur **78.3** génère une copie en retard $s_{LOC2}(t\text{-}\hat{\tau}\text{+}\Delta/n)$ de la forme d'onde binaire locale $s_{LOC2}$. Le générateur **78.2** génère une copie prompte $s_{LOC1}(t\text{-}\hat{\tau})$ d'une forme d'onde binaire locale $s_{LOC1}$. La définition des formes d'ondes $s_{LOC1}$ et $s_{LOC2}$ a été donnée dans la description de la figure 6. Un additionneur **77** produit la différence entre les copies en avance $s_{LOC2}(t\text{-}\hat{\tau}\text{-}\Delta/n)$ et en retard $s_{LOC2}(t\text{-}\hat{\tau}\text{+}\Delta/n)$ de la forme d'onde local $s_{LOC2}$ qu'il reçoit des générateurs **78.1** et **78.3.** Cette différence est entrée aux mélangeurs **74.1** et **74.3.** Le corrélateur **72.3** fournit la valeur de la corrélation $Q_{E,SLOC2(\alpha B)}\text{-}Q_{L,SLOC2(\alpha B)}$ de la partie en quadrature de phase du signal entrant CBOC$(t\text{-}\tau)$ et de la différence des copies en avance et en retard de la forme d'onde binaire locale $s_{LOC2}$. Le corrélateur **72.4** fournit la valeur $Q_{P,SLOC1(\alpha A)}$ de la corrélation de la partie en quadrature de phase du signal entrant CBOC$(t\text{-}\tau)$ et de la copie prompte $s_{LOC1}(t\text{-}\hat{\tau})$ de la forme d'onde binaire locale $s_{LOC1}$.

Dans les deux modes d'exécution du nouveau procédé, on peut calculer le discriminateur de produit scalaire, qui s'exprime comme suit :

$$D = (I_{E,SLOC2(\alpha B)} - I_{L,SLOC2(\alpha B)})I_{P,SLOC1(\alpha A)} + (Q_{E,SLOC2(\alpha B)} - Q_{L,SLOC2(\alpha B)})Q_{P,SLOC1(\alpha A)} . \quad (12)$$

Pour la réception d'un signal CBOC(6,1,1/11) ou CBOC(6,1,2/11), le désavantage le plus important, de la technique utilisant la même forme d'onde locale binaire sur les voies prompte et décalées était la perte en corrélation. Grâce à la présente invention, on peut choisir la forme d'onde locale prompte avec une quote-part de BOC(1,1) plus importante, sans pour autant réduire la quote-part de BOC(6,1) dans les formes d'onde locales en avance ou en retard qui améliore la synchronisation.

Dans la suite, nous discuterons le cas particulier $\alpha_A=0$, c.-à-d. le cas où la forme d'onde locale prompte est une forme d'onde BOC(1,1). La première conséquence est que la perte en corrélation (dégradation su rapport $C/N_0$), en poursuite de phase (pour laquelle on utilise les corrélateurs prompts uniquement), est minimale (d'environ 0,9 dBs pour un signal CBOC(6,1,2/11) et d'environ 0,5 dBs pour un signal CBOC(6,1,1/11), comme on peut le voir à la figure 4).

Avec $\alpha_A=0$ et le discriminateur de produit scalaire, on obtient une erreur théorique de poursuite de code :

$$\sigma^2_{DP,SLOC2(\alpha B)} = \frac{B_L\left(1-0.5B_L T\right)\widetilde{R}_{SLOC2(\alpha B)}(d)}{\dfrac{P}{2N_0}\left(\dfrac{d\widetilde{R}_{CBOC/SLOC2(\alpha B)}(x)}{dx}\Bigg|_{x=\frac{d}{2}}\right)^2}\left(1+\frac{\widetilde{R}_{BOC(1,1)}(0)}{\dfrac{PT}{N_0}\widetilde{R}^2_{CBOC/BOC(1,1)}(0)}\right) \qquad (13)$$

On remarque que le terme carré de corrélation entre la forme d'onde binaire locale et la forme d'onde de modulation BOC(6,1), présent dans l'équation (11), se trouve ici remplacé par le terme carré $\widetilde{R}^2_{CBOC/BOC(1,1)}(0)$, , qui est grand. En conséquence, l'erreur quadratique de poursuite de code diminue quand $\alpha_A$ diminue.

On montre que pour une forme d'onde de modulation CBOC(6,1,2/11,'-'), l'écart-type de l'erreur de poursuite de code diminue pour tous les rapports $C/N_0$ si la valeur du paramètre $\alpha_B$ augmente ($\alpha_A=0$). Dans le cas extrême $\alpha_B=1$ (un pur BOC(6,1) comme forme d'onde locale en avance et en retard), on a la meilleure performance de poursuite.

Les prédictions théoriques ont été vérifiées à l'aide d'un simulateur avec les réglages suivants :

+ réception d'un signal CBOC(6,1,2/11,'-') d'une durée de 40 s ;

+ temps d'intégration de 4 ms ;

+ boucle DLL avec assistance de porteuse et ayant une largeur de bande de 1 Hz ;

+ boucle PLL ayant une largeur de bande de 10 Hz, le discriminateur étant basé seulement sur la partie en quadrature de phase ;

+ largeur de bande à l'entrée de 10 MHz (one-sided)

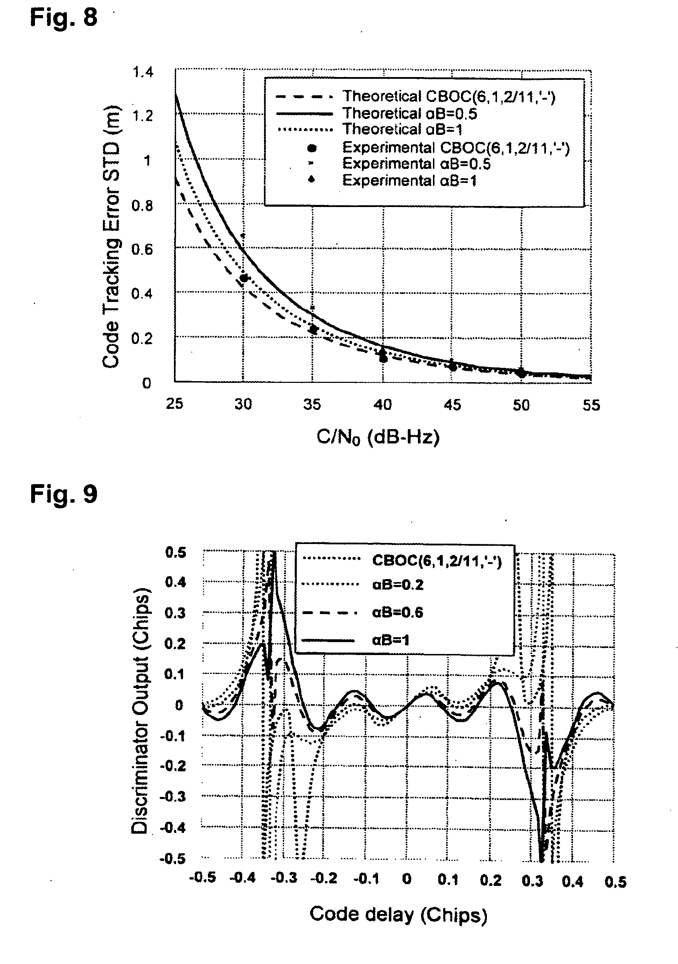

Les résultats des simulations sont montrées à la figure 8 et dans dans les tableaux suivants :

| C/N₀ (dB-Hz) | Dégradation C/N₀ (dB) | | |
|:---:|:---:|:---:|:---:|
| | CBOC | $\alpha_B$=0.5 | $\alpha_B$=1 |
| 30 | 0 | -0.50 | -0.49 |
| 35 | 0 | -0.54 | -0.54 |
| 40 | 0 | -0.55 | -0.55 |
| 45 | 0 | -0.56 | -0.56 |
| 50 | 0 | -0.56 | -0.56 |

| C/N$_0$ (dB-Hz) | Ecart-type de l'erreur de poursuite de code (m) | | |
|---|---|---|---|
| | CBOC | $\alpha_B$=0.5 | $\alpha_B$=1 |
| 30 | 0.467 | 0.653 | 0.467 |
| 35 | 0.241 | 0.336 | 0.242 |
| 40 | 0.112 | 0.154 | 0.138 |
| 45 | 0.074 | 0.102 | 0.075 |
| 50 | 0.043 | 0.063 | 0.046 |

| C/N$_0$ (dB-Hz) | Ecart-type de l'erreur de poursuite de phase (rad) | | |
|---|---|---|---|
| | CBOC | $\alpha_B$=0.5 | $\alpha_B$=1 |
| 30 | 0.0841 | 0.0904 | 0.0909 |
| 35 | 0.0461 | 0.0492 | 0.0493 |
| 40 | 0.0252 | 0.0267 | 0.0267 |
| 45 | 0.0144 | 0.0154 | 0.0154 |
| 50 | 0.0075 | 0.0079 | 0.0079 |

La figure 9 montre le discriminateur de produit scalaire normalisé (par ($I_{P,SLOC(\alpha A)}^2 + Q_{P,SLOC(\alpha A)}^2 = I_{P,BOC(1,1)}^2 + Q_{P,BOC(1,1)}^2$) pour la réception d'un signal CBOC(6,1,2/11,'-') pour différentes valeurs de $\alpha_B$. En comparaison, on montre aussi la courbe qu'on obtient avec une forme d'onde locale CBOC(6,1,2/11,'-'). Pour des valeurs de $\alpha_B$ élevées, les points de fausse poursuite sont plus prononcés. On devra donc implémenter une technique de poursuite sans ambiguïté. Les courbes de la figure 9 ont été obtenus avec les paramètres suivants : un espacement de 0,1 bribes entre la forme d'onde binaire locale en avance et la forme d'onde binaire locale en retard, un filtre 15 MHz (single-sided) à l'entrée et 4 ms de temps d'intégration (de corrélation).

En ce qui concerne le multi-trajet, il est évident que plus la quote part de BOC(6,1) dans la forme d'onde binaire locale est importante, plus l'enveloppe d'erreurs multi-trajet obtenue se rapproche d'une enveloppe d'erreurs multi-trajet d'une forme d'onde locale BOC(6,1). Il est difficile de voir comment la performance, en termes de multi-trajet, est affectée pour des valeurs $\alpha_B \geq 0,3$. Pourtant, on suppose que la performance reste à peu près la même. Dans ce cas, vu l'analyse qui précède, il est probablement avantageux d'utiliser une valeur de $\alpha_B$ élevée, proche de 1, voire égale à 1.

Dans l'analyse détaillée des performances du nouveau procédé, nous avons assumé $\alpha_A$=0. Il est évident que des performances semblables peuvent être réalisées pour des valeurs de $\alpha_A$ proches, mais différentes de 0. Notons aussi que le choix optimal de $\alpha_A$ et $\alpha_B$ dépendra substantiellement de la forme d'onde de modulation du signal de radionavigation. Celle-ci peut être une forme d'onde CBOC, comme dans la description détaillée, ou bien, répétons-le, une forme d'onde du type TMBOC, comme envisagée pour le signal GPSL1C.

Dans l'analyse, uniquement le discriminateur de produit scalaire a été discuté. On notera cependant qu'il existe d'autres discriminateurs qui peuvent également être utilisés pour implémenter la présente invention, notamment un discriminateur « Early-Minus-Late » ou « Prompt », par exemple pour détecter la phase du signal entrant.

Reste à mentionner que pour recevoir plusieurs signaux émis par les satellites, un récepteur a besoin d'une pluralité de canaux de réception. Pour chaque canal de réception du récepteur, il y a un ensemble de corrélateurs comme décrit dans la présente description, dont les signaux de sortie sont combinés pour former, en mode d'acquisition du signal, l'estimation d'énergie du signal reçu et, en mode poursuite du signal, le discriminateur du code pseudo-aléatoire.

**Revendications**

1. Procédé de réception d'un signal de radionavigation modulé par une forme d'onde de modulation, la forme d'onde de modulation comprenant une composante BOC($n_1$,m) et une composante BOC($n_2$,m), $n_1$ étant distinct de $n_2$; dans lequel sont opérées, sur un intervalle de temps de durée T, une corrélation entre une forme d'onde locale prompte et ladite forme d'onde de modulation et une corrélation entre une forme d'onde locale décalée et ladite forme d'onde de modulation ;

**caractérisé en ce que** ladite forme d'onde locale prompte est générée en tant que forme d'onde binaire comprenant sur ledit intervalle de temps au moins un segment de forme d'onde BOC($n_2$,m) d'une durée totale de (1-$\alpha_A$)T sur ledit intervalle de temps, $\alpha_A$ étant un paramètre supérieur ou égal à 0 et strictement inférieur à 1,

**en ce que** ladite forme d'onde locale décalée est générée en tant que forme d'onde binaire comprenant sur ledit intervalle de temps au moins un segment de forme d'onde BOC($n_1$,m) d'une durée totale de $\alpha_B$T sur ledit intervalle de temps, $\alpha_B$ étant un paramètre strictement supérieur à 0 et inférieur ou égal à 1, et les paramètres $\alpha_A$ et $\alpha_B$ étant différents.

2. Procédé selon la revendication 1, dans lequel $\alpha_A$ est égal à 0.

3. Procédé selon la revendication 1 ou 2, dans lequel $\alpha_B$ est égal à 1.

4. Procédé selon l'une quelconque des revendications 1 à 3, dans lequel $\alpha_A$ est inférieur à $\alpha_B$.

5. Procédé selon l'une quelconque des revendications 1, 3 et 4, dans lequel la forme d'onde locale prompte comprend sur ledit intervalle de temps au moins un segment de forme d'onde BOC($n_1$,m) d'une durée totale de $\alpha_A$T sur ledit intervalle de temps, $\alpha_A$ étant strictement compris entre 0 et 1.

6. Procédé selon l'une quelconque des revendications 1, 2, 4 et 5, dans lequel la forme d'onde locale décalée comprend sur ledit intervalle de temps au moins un segment de forme d'onde BOC($n_2$,m) d'une durée totale de (1-$\alpha_B$)T sur ledit intervalle de temps, $\alpha_B$ étant strictement compris entre 0 et 1.

7. Procédé selon l'une quelconque des revendications 1 à 6, dans lequel ladite forme d'onde locale décalée comprend une forme d'onde locale en avance ou une forme d'onde en retard ou une différence entre une forme d'onde locale en avance et une forme d'onde locale en retard.

8. Procédé selon l'une quelconque des revendications 1 à 7, dans lequel ladite forme d'onde de modulation modulant le signal de radionavigation est une forme d'onde de modulation de type CBOC, la forme d'onde de modulation de type CBOC comprenant une combinaison linéaire à paramètres réels de la composante BOC($n_1$,m) et de la composante BOC($n_2$,m).

9. Procédé selon l'une quelconque des revendications 1 à 7, dans lequel ladite forme d'onde de modulation modulant le signal de radionavigation est une forme d'onde de modulation de type TMBOC, la forme d'onde de modulation de type TMBOC comprenant une succession alternante de segments de la composante BOC($n_1$,m) et de segments de la composante BOC($n_2$,m).

10. Récepteur (60, 70) comprenant des moyens (68.1-68.3, 78.1-78.3, 18.1-18.6, 62.1-62.6, 72.1-72.4, 20.1-20.6, 64.1-64.6, 74.1-74.4, 22.1-22.6, 66.1-66.6, 76.1-76.4, 77) pour la mise en oeuvre du procédé selon l'une quelconque des revendications 1 à 9.

11. Récepteur (60, 70) selon la revendication 10, comprenant
des générateurs de forme d'onde locale (68.1-68.3, 78.1-78.3) pour générer une forme d'onde locale prompte et une forme d'onde locale décalée ainsi que
des corrélateurs (18.1-18.6, 62.1-62.6, 72.1-72.4) pour opérer, sur un intervalle de temps de durée T, une corrélation entre la forme d'onde locale prompte et la forme d'onde de modulation et une corrélation entre la forme d'onde locale décalée et la forme d'onde de modulation ;
lesdits générateurs de forme d'onde locale (68.1-68.3, 78.1-78.3) étant configurés pour générer ladite forme d'onde locale prompte en tant que forme d'onde binaire comprenant sur ledit intervalle de temps au moins un segment de forme d'onde BOC($n_2$,m) d'une durée totale de (1-$\alpha_A$)T sur ledit intervalle de temps, $\alpha_A$ étant un paramètre supérieur ou égal à 0 et strictement inférieur à 1, et pour générer ladite forme d'onde locale décalée en tant que forme d'onde binaire comprenant sur ledit intervalle de temps au moins un segment de forme d'onde BOC($n_1$,m) d'une durée totale de $\alpha_B$T sur ledit intervalle de temps, $\alpha_B$ étant un paramètre différent du paramètre $\alpha_A$ ainsi que strictement supérieur à 0 et inférieur ou égal à 1.

12. Récepteur (60,70) selon la revendication 11, comprenant un générateur de forme d'onde locale prompte, un générateur de forme d'onde locale décalée (68.1, 68.3, 78.1, 78.3), un premier corrélateur (18.2, 18.5, 62.2, 62.5, 72.2, 72.5) doté d'un mélangeur (20.2, 20.5, 64.2, 64.5, 74.2, 74.4) pour mélanger la forme d'onde de modulation avec la forme d'onde locale prompte et un deuxième corrélateur (18.1, 18.3, 18.4, 18.6, 62.1, 62.3, 62.4, 62.6, 72.1, 72.3) doté d'un mélangeur (20.1, 20.3, 20.4, 20.6, 64.1, 64.3, 64.4, 64.6, 74.1, 74.3) pour mélanger la forme d'onde de modulation avec la forme d'onde locale décalée.

## Claims

1. A method of receiving a radionavigation signal modulated by a modulation waveform, the modulation waveform comprising a $BOC(n_1,m)$ component and a $BOC(n_2,m)$ component, $n_1$ differing from $n_2$;
in which are performed, over a time interval of duration T, a correlation between a prompt local waveform and said modulation waveform and a correlation between an offset local waveform and said modulation waveform;
**characterised in that** said prompt local waveform is generated as a binary waveform comprising over said time interval at least one segment of waveform $BOC(n_2,m)$ of a total duration of $(1-\alpha_A)T$ over said time interval, $\alpha_A$ being a parameter greater than or equal to 0 and strictly less than 1,
**in that** said offset local waveform is generated as a binary waveform comprising over said time interval at least one segment of waveform $BOC(n_1,m)$ of a total duration of $\alpha_B T$ over said time interval, $\alpha_B$ being a parameter strictly greater than 0 and less than or equal to 1, and the parameters $\alpha_A$ and $\alpha_B$ being different

2. A method according to claim 1, in which $\alpha_A$ is equal to 0.

3. A method according to claim 1 or 2, in which $\alpha_B$ is equal to 1.

4. A method according to any one of claims 1 to 3, in which $\alpha_A$ is less than $\alpha_B$.

5. A method according to any one of claims 1, 3 and 4, in which the prompt local waveform comprises over said time interval at least one segment of waveform $BOC(n_1,m)$ of a total duration of $\alpha_A T$ over said time interval, $\alpha_A$ being strictly between 0 and 1

6. A method according to any one of claims 1, 2, 4 and 5, in which the offset local waveform comprises over said time interval at least one segment of waveform $BOC(n_2,m)$ of a total duration of $(1-\alpha_B)T$ over said time interval, $\alpha_B$ being strictly between 0 and 1

7. A method according to any one of claims 1 to 6, in which said offset local waveform comprises an early local waveform or a late waveform or a difference between an early local waveform and a late local waveform

8. A method according to any one of claims 1 to 7, in which said modulation waveform which modulates the radionavigation signal is a CBOC type modulation waveform, the CBOC type modulation waveform comprising a linear combination with real parameters of the $BOC(n_1,m)$ component and of the $BOC(n_2,m)$ component

9. A method according to any one of claims 1 to 7, in which said modulation waveform which modulates the radionavigation signal is a TMBOC type modulation waveform, the TMBOC modulation waveform comprising an alternating succession of segments of the $BOC(n_1,m)$ component and segments of the $BOC(n_2,m)$ component

10. A receiver (60, 70) comprising means (68.1-68.3, 78.1-78.3, 18.1-18.6, 62.1-62.6, 72.1-72,4, 20.1-20.6, 64.1-64.6, 74.1-74.4, 22.1-22.6, 66.1-66.6, 76.1-76.4, 77) for implementing a method according to any one of claims 1 to 9.

11. A receiver (60, 70) according to claim 10, comprising
local waveform generators (68.1-68.3, 78.1-78.3) for generating a prompt local waveform and an offset local waveform together with correlators (18.1-18.6, 62.1-62.6, 72 1-72 4) for performing, over a time interval of duration T, a correlation between the prompt local waveform and the modulation waveform and a correlation between the offset local waveform and the modulation waveform;
said local waveform generators (68.1-68.3, 78.1-78.3) being configured to generate said prompt local waveform as a binary waveform comprising over said time interval at least one segment of waveform $BOC(n_2,m)$ of a total duration of $(1-\alpha_A)T$ over said time interval, $\alpha_A$ being a parameter greater than or equal to 0 and strictly less than 1, and to generate said offset local waveform as a binary waveform comprising over said time interval at least one segment of waveform $BOC(n_1,m)$ of a total duration of $\alpha_B T$ over said time interval, $\alpha_B$ being a parameter differing from parameter $\alpha_A$ and strictly greater than 0 and less than or equal to 1

**12.** A receiver (60, 70) according to claim 11, comprising a prompt local waveform generator, an offset local waveform generator (68.1, 68.3, 78.1, 78 3), a first correlator (18.2, 18.5, 62.2, 82.5, 72.2, 72 5) equipped with a mixer (20 2, 20.5, 64 2, 64.5, 74 2, 74 4) for mixing the modulation waveform with the prompt local waveform and a second correlator (18 1, 18.3, 18.4, 18 6, 62 1, 62.3, 62.4, 62.6, 72 1, 72.3) equipped with a mixer (20 1, 20.3, 20.4, 20.6, 64.1, 64.3, 64.4, 64.6, 74.1, 74.3) for mixing the modulation waveform with the offset local waveform

**Patentansprüche**

**1.** Verfahren zum Empfang eines mittels einer Modulationswellenform modulierten Funknavigationssignals, welche Modulationswellenform eine BOC($n_1$,m)-Komponente und eine BOC($n_2$,m)-Komponente aufweist, wobei $n_1$ von $n_2$ verschieden ist;
bei dem in einem Zeitintervall der Länge T eine Korrelation zwischen einer sofortigen lokalen Wellenform und der Modulationswellenform und eine Korrelation zwischen einer verschobenen lokalen Wellenform und der Modulationswellenform durchgeführt wird;
**dadurch gekennzeichnet, dass** die sofortige lokale Wellenform als binäre Wellenform erzeugt wird, die in dem genannten Zeitintervall mindestens ein BOC($n_2$,m)-Wellenformsegment mit einer Gesamtlänge von (1-$\alpha_A$)T in dem genannten Zeitintervall aufweist, wobei $\alpha_A$ ein Parameter größer oder gleich 0 und streng kleiner als 1 ist,
dass die verschobene lokale Wellenform als binäre Wellenform erzeugt wird, die in dem genannten Zeitintervall mindestens ein BOC($n_1$,m)-Wellenformsegment mit einer Gesamtlänge von $\alpha_B$T in dem genannten Zeitintervall aufweist, wobei $\alpha_B$ ein Parameter streng größer als 0 und kleiner oder gleich 1 ist und die Parameter $\alpha_A$ und $\alpha_B$ verschieden sind.

**2.** Verfahren nach Anspruch 1, bei dem $\alpha_A$ gleich 0 ist

**3.** Verfahren nach Anspruch 1 oder 2, bei dem $\alpha_B$ gleich 1 ist

**4.** Verfahren nach irgendeinem der Ansprüche 1 bis 3, bei dem $\alpha_A$ kleiner als $\alpha_B$ ist.

**5.** Verfahren nach irgendeinem der Ansprüche 1, 3 und 4, bei dem die sofortige lokale Wellenform in dem genannten Zeitintervall mindestens ein BOC($n_1$,m)-Wellenformsegment mit einer Gesamtlänge von $\alpha_A$T in dem genannten Zeitintervall aufweist, wobei $\alpha_A$ streng zwischen 0 und 1 liegt.

**6.** Verfahren nach irgendeinem der Ansprüche 1, 2, 4 und 5, bei dem die verschobene lokale Wellenform in dem genannten Zeitintervall mindestens ein BOC($n_2$,m)-Wellenformsegment mit einer Gesamtlänge von (1-$\alpha_B$)T in dem genannten Zeitintervall aufweist, wobei $\alpha_B$ streng zwischen 0 und 1 liegt.

**7.** Verfahren nach irgendeinem der Ansprüche 1 bis 6, bei dem die verschobene lokale Wellenform eine voreilende lokale Wellenform oder eine nacheilende Wellenform oder eine Differenz zwischen einer voreilenden lokalen Wellenform und einer nacheilenden lokalen Wellenform aufweist

**8.** Verfahren nach irgendeinem der Ansprüche 1 bis 7, bei dem die das Funknavigationssignal modulierende Modulationswellenform eine CBOC-Modulationswellenform ist, wobei die CBOC-Modulationswellenform eine Linearkombination mit reellen Parametern aus der BOC($n_1$,m)-Komponente und der BOC($n_2$,m)-Komponente aufweist

**9.** Verfahren nach irgendeinem der Ansprüche 1 bis 7, bei dem die das Funknavigationssignal modulierende Modulationswellenform eine TMBOC-Modulationswellenform ist, wobei die TMBOC-Modulationswellenform eine Wechselfolge von Segmenten der BOC($n_1$,m)-Komponente und Segmenten der BOC($n_2$,m)-Komponente aufweist

**10.** Empfänger (60, 70), aufweisend Mittel (68.1-68.3, 78 1-78 3, 18.1-18.6, 62.1-62.6, 72.1-72.4, 20.1-20.6, 64.1-64.6, 74 1-74 4, 22.1-22.6, 66 1-66.6, 76.1-76.4, 77) für die Durchführung des Verfahrens nach irgendeinem der Ansprüche 1 bis 9.

**11.** Empfänger (60, 70) nach Anspruch 10, aufweisend
lokale Wellenformgeneratoren (68.1-68.3, 78.1-78.3) zum Erzeugen einer sofortigen lokalen Wellenform und einer verschobenen lokalen Wellenform sowie
Korrelatoren (18.1-18.6, 62.1-62.6, 72.1-72.4), um in einem Zeitintervall der Länge T eine Korrelation zwischen der sofortigen lokalen Wellenform und der Modulationswellenform und eine Korrelation zwischen der verschobenen lokalen Wellenform und der Modulationswellenform durchzuführen;

wobei die lokalen Wellenformgeneratoren (68.1-68.3, 78.1-78.3) dazu ausgestaltet sind, die sofortige lokale Wellenform als binäre Wellenform zu erzeugen, die in dem genannten Zeitintervall mindestens ein $BOC(n_2,m)$-Wellenformsegment mit einer Gesamtlänge von $(1-\alpha_A)T$ in dem genannten Zeitintervall aufweist, wobei $\alpha_A$ ein Parameter größer oder gleich 0 und streng kleiner als 1 ist, und die verschobene lokale Wellenform als binäre Wellenform zu erzeugen, die in dem genannten Zeitintervall mindestens ein $BOC(n_1,m)$-Wellenformsegment mit einer Gesamtlänge von $\alpha_B T$ in dem genannten Zeitintervall aufweist, wobei $\alpha_B$ ein vom Parameter $\alpha_A$ verschiedener Parameter ist, der streng größer als 0 und kleiner oder gleich 1 ist.

12. Empfänger (60, 70) nach Anspruch 11, aufweisend einen Generator zum Erzeugen einer sofortigen lokalen Wellenform, einen Generator zum Erzeugen einer verschobenen lokalen Wellenform (68.1, 68.3, 78.1, 78.3), einen ersten Korrelator (18.2, 18.5, 62.2, 62 5, 72.2, 72 5) mit einem Mischer (20.2, 20.5, 64.2, 64.5, 74.2, 744) zum Mischen der Modulationswellenform mit der sofortigen lokalen Wellenform und einen zweiten Korrelator (18.1, 18.3, 184, 18.6, 62.1, 62 3, 624, 62.6, 72 1, 72.3) mit einem Mischer (20 1, 20 3, 20.4, 20.6, 64.1, 64.3, 64.4, 64.6, 74 1, 74.3) zum Mischen der Modulationswellenform mit der verschobenen lokalen Wellenform.

**Fig. 1**

**Fig. 2**

**Fig. 3**

**Fig. 4**

**Fig. 5**

**Fig. 6**

**Fig. 7**

## Fig. 8

## Fig. 9

**EP 2 074 704 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 1681773 A

- FR 0605551

### Littérature non-brevet citée dans la description

- **Hein et al.** MBOC : The New Optimized Spreading Modulation Recommended for GALILEO L1 OS and GPS L1C. *InsideGNSS,* Mai 2006, 57-65